# EUROPEAN PATENT SPECIFICATION

(11) **EP 2 454 086 B1**
(45) Date of publication and mention of the grant of the patent: **24.06.2015**
(21) Application number: 10719893.9
(22) Date of filing: 18.05.2010
(51) Int. Cl.: B32B 5/18, B32B 5/24, B32B 27/12, B32B 27/32, C08J 9/00, D06N 3/04

(54) **POLYOLEFIN-BASED ARTIFICIAL LEATHER**
KUNSTLEDER AUF POLYOLEFINBASIS
CUIR ARTIFICIEL À BASE DE POLYOLÉFINE

(30) Priority: 16.07.2009 US 226082 P
(43) Date of publication of application: 23.05.2012
(73) Proprietor: Dow Global Technologies LLC, Midland, MI 48674 (US)
(72) Inventor: CHEE, Ho Jin, Yongin (KR); OHMURA, Takahiko, Fujisawa-shi (JP); KANG, Hosung, Bundang (KR); WALTON, Kim, Lake Jackson TX 77566-4414 (US)
(74) Representative: Boult Wade Tennant
(86) International application number: PCT/US2010/035256
(87) International publication number: WO 2011/008336

(56) References cited:
- EP-A1- 1 285 945
- EP-A1- 1 882 715
- WO-A2-2008/008875
- JP-A- 2008 095 238
- US-A- 3 846 349
- US-A1- 2002 136 914

## Description

### CROSS-REFERENCE TO RELATED APPLICATION

This claims the benefit of US Provisional Application Number 61/226,082 filed July 16,2009.

### FIELD OF THE INVENTION

This invention relates to artificial leather. In one aspect, the invention relates to artificial leather comprising a multilayer structure while in another aspect, the invention relates to such a structure comprising a top skin layer, a middle foam layer and a bottom fabric layer.

### BACKGROUND OF THE INVENTION

Artificial leather made from polyolefin (PO) based resins, e.g., polyethylene (PE), polypropylene (PP), etc., is inexpensive relative to natural and polyvinyl chloride (PVC) or cast polyurethane (PU) based leathers, and it avoids most of the shortcomings of artificial leather made from PVC- or PU-based resins, but it has its own set of problems. The PO-based resins typically require blending elastomeric material to increase the softness, or decrease the hardness, of the artificial leather so that it is comparable to the softness of artificial leather made with a flexible PVC resin. However, not all elastomeric material is compatible with all polyolefins and even in those situations in which compatibility is not an issue, the use of paraffin oil is often required to achieve the desired flexibility in the final product. Moreover, even though an artificial leather made with a PO-based resin comprising a elastomeric material and paraffin oil is able to show similar hardness and flexibility to that of artificial leather made with a flexible PVC-based resin, the inherent characteristics of PO-based resin systems often present hurdles to their use as a replacement for PVC-based resins. These inherent characteristics include high melting point, fast cooling on roll processing (due to crystallization), tackiness (the result of the presence of a low molecular weight component), and very poor adhesion to polar materials.

### SUMMARY OF THE INVENTION

In one embodiment, the invention is artificial leather comprising a multi-layer structure comprising a bottom fabric layer and at least one of a top skin layer and a foam layer. In one embodiment, the invention is artificial leather comprising a bottom fabric layer and a top skin layer. In one embodiment, the invention is artificial leather comprising a bottom fabric layer and a covering foam layer. The top skin layer is not foamed, and it comprises a propylene-alpha-olefin copolymer in combination with one or more elastomeric compounds, the foam layer also comprises a propylene-alpha-olefin copolymer in combination with one or more elastomeric compounds, and the fabric layer comprises a flexible, polymeric material.

In one embodiment, the invention is artificial leather comprising a multi-layer structure comprising a top skin layer, a middle foam layer, and a bottom fabric layer. The top skin layer is not foamed, and it comprises a propylene-alpha-olefin copolymer in combination with one or more elastomeric compounds, the foam layer also comprises a propylene-alpha-olefin copolymer in combination with one or more elastomeric compounds, and the fabric layer comprises a flexible, polymeric material.

In one embodiment, the invention is a multilayer structure comprising:
A. A top skin layer comprising a propylene/alpha-olefin copolymer and at least one of (i) a styrenic block copolymer, (ii) a homogeneously branched ethylene/alpha-olefin copolymer, (iii) an olefin block copolymer, and (iv) a random polypropylene copolymer;
B. A middle foam layer comprising a propylene/alpha-olefin copolymer and at least one of (i) a styrenic block copolymer, (ii) a homogeneously branched ethylene/alpha-olefin copolymer, (iii) an olefin block copolymer, and (iv) a random polypropylene copolymer; and
C. A bottom fabric layer comprising a flexible, polymeric material.

In one embodiment, the multilayer structure further comprises a primer layer, e.g., chlorinated polypropylene (CPP), in contact with the top skin layer, and a top coating layer, e.g., a polyurethane (PU), in contact with the primer layer.

### BRIEF DESCRIPTION OF THE DRAWINGS

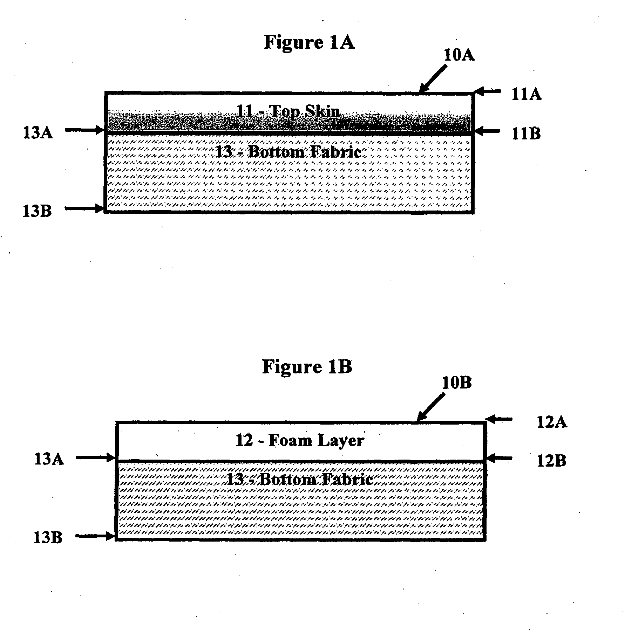

Figure 1A is a first schematic diagram of a two-layer structure of this invention.
Figure 1B is a second schematic diagram of a two-layer structure of this invention.

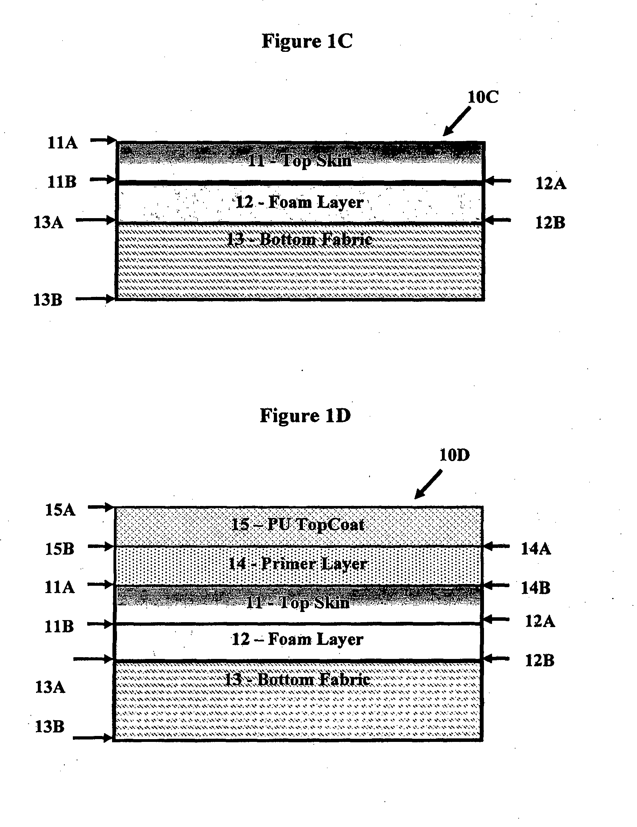

Figure 1C is a schematic diagram of a three-layer structure of this invention.
Figure 1D is a schematic diagram of a five-layer structure of this invention.

### DETAILED DESCRIPTION OF THE INVENTION

### Definitions

Numerical ranges include all values from and including the lower and the upper values, in increments of one unit, provided that there is a separation of at least two units between any lower value and any higher value.

"Polymer" means a polymeric compound prepared by polymerizing monomers, whether of the same or a different type. The generic term polymer thus embraces the term homopolymer, usually employed to refer to polymers prepared from only one type of monomer, and the term interpolymer as defined below..

"Interpolymer", "copolymer" and like terms means a polymer prepared by the polymerization of at least two different types of monomers. These generic terms refer both to polymers prepared from two different types of monomers, and polymers prepared from more than two different types of monomers, e.g., terpolymers, tetrapolymers, etc.

"Layer" and like terms mean a single thickness or coating of a compound, polymer or composition spread out or covering a surface.

"Multi-layer structure" and similar terms mean a structure that comprises two or more layers. The multi-layer structures of this invention comprise a top skin layer, a middle foam layer, a bottom fabric layer, and optionally, a primer layer and a top coating layer. Each layer comprises top and bottom facial surfaces, and typically and preferably the bottom facial surface of the top coating layer is in contact with the top facial surface of the middle foam layer, and the bottom facial surface of the middle foam layer is in contact with the top facial surface of the bottom fabric layer. If the optional primer and top coating layers are present, then the bottom facial surface of the primer layer is in contact with the top facial surface of the top skin layer, and the top facial surface of the primer layer is in contact with the bottom facial surface of the top coating layer. "In contact" means that an intervening layer, e.g., and adhesive layer, does not exist between the two facial surfaces.

"Planar surface", "facial surface", "top surface", "bottom surface" and like terms are used in distinction to "edge surface". If rectangular in shape or configuration, a layer will comprise two opposing planar surfaces joined by four edge surfaces (two opposing pairs of edge surfaces, each pair intersecting the other pair at right angles). If circular in configuration, then the layer will comprise two opposing planar surfaces joined by one continuous edge surface. The multi-layer structure can be of any size and shape and as such, so can the planar and edge surfaces, e.g., thin or thick, polygonal or circular, flat or wavy, etc.

"Calendering" and like terms mean, in the context of this invention, a mechanical process in which a molten polymer is converted into a sheet by passing the molten polymer through a series of rollers to coalesce, flatten and smooth the polymer into a sheet or film.

"Laminating" and like terms mean a process in which a film, typically of plastic or like material, is applied to a substrate which can be another film. The film can be applied to the substrate with or without an adhesive. If without an adhesive, the film and/or substrate can be heated to effect heat or melt lamination. Laminations are products of a laminating process, and these products are multilayered, i.e., they comprise at least two layers, a film layer in contact with a base or substrate layer.

"Nonwoven fabric" and like terms mean a fabric or like material that is made from long fibers, bonded together by chemical, mechanical, heat or solvent treatment. The term is used to denote fabrics, like felt, than are neither woven nor knitted.

"Spunbond fabric" and like terms mean a fabric or like material that is made by depositing extruded, spun filaments onto a collecting belt in a uniform, random manner followed by bonding of the fibers.

"Foam" and like terms mean a substance that is formed by trapping many gas bubbles in a liquid or solid.

### Multi-Layer Structure

Figure 1A is a schematic of two-layer structure 10A in which top skin layer 11 is over and in contact with bottom fabric layer 13. Each layer comprises two opposing facial surfaces, top facial surface 11a and bottom facial surface 11b of top skin layer 11, and top facial surface 13a and bottom facial surface 13b of bottom fabric layer 13. Bottom facial surface 11b is in contact with top facial surface 13a. Top facial surface 11a and bottom facial surface 13b are open (i.e., exposed) to the environment or, optionally, in contact with the surface of another structure. The thickness of each layer can vary to convenience as can the total thickness of the structure. Typically the thickness of the top skin layer is 0.05 to 3, more typically 0.08 to 2 and even more typically 0.1 to 1, millimeters (mm), and the thickness of the bottom fabric layer is 0.05 to 3, more typically 0.08 to 2.5 and even more typically 0.1 to 2, mm. The thickness of the total structure is typically of 0.1 to 6, more typically of 0.15 to 5 and even more typically of 0.2 to 3, mm.

Figure 1B is a schematic of two-layer structure 10B in which foam layer 12 is over and in contact with bottom fabric layer 13. Each layer comprises two opposing facial surfaces, top facial surface 12a and bottom facial surface 12b of foam layer 11, and top facial surface 13a and bottom facial surface 13b of bottom fabric layer 13. Bottom facial surface 12b is in contact with top facial surface 13a. Top facial surface 12a and bottom facial surface 13b are open (i.e., exposed) to the environment or, optionally, in contact with the surface of another structure. The thickness of each layer can vary to convenience as can the total thickness of the structure. Typically the thickness of the foam layer is 0.05 to 3, more typically 0.08 to 2.5 and even more typically 0.1 to 2, millimeters (mm), and the thickness of the bottom fabric layer is 0.05 to 3, more typically 0.08 to 2.5 and even more typically 0.1 to 2, mm. The thickness of the total structure is typically of 0.1 to 6, more typically of 0.15 to 5 and even more typically of 0.2 to 4, mm.

Figure 1C is a schematic of three-layer structure 10C in which top skin layer 11 is over and in contact with middle foam layer 12 which is over and in contact with bottom fabric layer 13. Each layer comprises two opposing facial surfaces, top facial surface 11a and bottom facial surface 11b of top skin layer 11, top facial surface 12a and bottom facial surface 12b of middle foam layer 12, and top facial surface 13a and bottom facial surface 13b of bottom fabric layer 13. Bottom facial surface 11b is in contact with top facial surface 12a, and bottom facial surface 12b is in contact with top facial surface 13a. Top facial surface 11a and bottom facial surface 13b are open (i.e., exposed) to the environment or, optionally, in contact with the surface of another structure. The thickness of each layer can vary to convenience as can the total thickness of the structure. Typically the thickness of the top skin layer is 0.05 to 3, more typically 0.08 to 2 and even more typically 0.1 to 1, millimeters (mm), the thickness of the middle foam layer is 0.05 to 3, more typically 0.08 to 2.5 and even more typically 0.1 to 2, mm, and the thickness of the bottom fabric layer is 0.5 to 3, more typically 0.08 to 2.5 and even more typically 0.1 to 2, mm. The thickness of the total structure is typically of 0.15 to 9, more typically of 0.24 to 7 and even more typically of 0.3 to 5, mm.

Figure 1D is a schematic of five-layer structure 10D in which optional primer layer 14 is over and in contact with top skin layer 11 of three-layer structure 10C, and optional top coating layer 15 is over and in contact with primer layer 14. Each optional layer comprises two opposing facial surfaces, top facial surface 15a and bottom facial surface 15b of optional top coating layer 15, and top facial surface 14a and bottom facial surface 14b of optional primer layer 14. Bottom facial surface 15b is in contact with top facial surface 14a, and bottom facial surface 14b is in contact with top facial surface 11a. In this embodiment, top facial surface 15a and bottom facial surface 13b are exposed to the environment or, optionally, in contact with a facial surface of another structure. The thickness of each optional layer can vary to convenience, with the thickness of the optional top coating layer typically of 0.1 to 100, more typically 1 to 50 and even more typically 3 to 10, microns (µm), and the thickness of the optional primer layer typically of 0.1 to 100, more typically 1 to 50 and even more typically 3 to 10, µm. Here too, the thickness of a typical 3-layer structure can vary widely, but it is typically of 0.15 to 9, more typically of 0.24 to 7 and even more typically of 0.3 to 5, mm (the optional top coating and primer layers adding little to the thickness of the total (5-layer) structure). The thickness of the top coating layer is typically less than the thickness of the top skin layer.

The three-layer structures of this invention are typically made by laminating one layer to another in any order, i.e., the top skin layer laminated to middle foam layer followed by the bottom fabric layer laminated to the middle foam layer, or the top skin layer and the bottom fabric layer are laminated to the middle foam layer at the same time. If the multilayer structure also comprises the optional primer and top coating layers, these are usually, but not necessarily, applied after the top skin, middle foam and bottom fabric layers are laminated to one another. Typically the primer layer is roll-coated to the top facial surface of the top skin layer followed by the coating of the top coating to the primer layer. The two- and three-layer structures, i.e., structures 10A, 10B and 10C in Figures 1A, 1B and 1C, respectively, are non-adhesive structures or in other words, they do not contain an adhesive layer between any of the layers, i.e., no adhesive between and in contact with the foam layer and the top skin layer, or between and in contact with the foam layer and the bottom fabric layer, or between and in contact with the top skin layer and the bottom fabric layer.

The multilayer structure of this invention comprises a minimum of three layers including a fabric layer and at least one of a propylene/alpha-olefin based foam layer and a propylene/alpha-olefin based top skin layer. Optionally, the multilayer structure can comprise additional layers applied to the exposed facial surfaces of the top skin and/or fabric layers. In one embodiment, a primer, e.g., a halogenated polyolefin such as chlorinated polypropylene (CPP), is applied to the exposed facial surface of the top skin layer and a top coating, e.g., polyurethane, is applied to the exposed facial surface of the primer layer. The purpose of the backing or fabric layer is to sustain the shaping of structure, i.e. the leather, to improve its mechanical properties, and to provide stability for the foaming of the middle foam layer at an elevated temperature, e.g., 220°C or more. The foamed layer, if present, provides flexibility to the multilayer structure as well as cushioning, softness, thermal insulating, light weight and the hand feel. The top skin layer, if present, provides protection against UV-radiation, heat and other weathering factors, and it may carry visible functionalities such as print, embossment, color and/or gloss. The purpose of the top coating layer is to provide protection to the top skin layer and overall structure from scratches, mars and abrasion, to provide a surface for text and designs, and to impart an aesthetically pleasing finish. The purpose of the primer layer is to facilitate the attachment of the top coating layer to the top skin layer.

In one embodiment the multilayer structures of this invention are characterized by at least one of the following characteristics:
1. Non-halogenated formulations which mimic the physical properties, hand feel and embossment retention properties of natural leather using polyolefin-based formulations (in those embodiments in which the artificial leather of this invention includes a halogenated hydrocarbon in the primer layer, the amount of halogen in the artificial leather as compared to the amount of halogen in PVC-based artificial leather is so nominal as to have little, if any, negative impact on the recyclability of the leather);
2. Elimination of migratory plasticizing agents;
3. Reduced density and weight relative to PU- and PVC-based formulations, and the elimination of PU and PVC compounds from the formulation;
4. UV-stability and non-yellowing;
5. Fully recyclable using existing scrap recovery and reprocessing techniques;
6. Comparable physical and mechanical properties relative to incumbent artificial leather formulations
7. Propylene/alpha-olefin copolymer based foam layer for good hand feel, e.g., softness, smoothness, etc., and flexibility;
8. Propylene/alpha-olefin copolymer based top coating layer; and
9. Eliminated or reduced hydrolysis due to weathering as compared to PU or TPU-based leathers.
In certain embodiments the multilayer structure is characterized by two, three, four, five, six, seven, eight or all nine of these features.

### Top Skin Layer

The top skin layer (layer 11 in Figures 1A, 1C and ID) comprises a propylene/alpha-olefin copolymer, preferably a propylene/ethylene copolymer, and at least one of (i) a styrenic block copolymer, (ii) a homogeneously branched ethylene/alpha-olefin copolymer, (iii) an olefin block copolymer, and (iv) a random polypropylene copolymer. In one embodiment the top skin layer comprises a propylene/alpha-olefin copolymer and at least two, or at least three, or all four of (i) a styrenic block copolymer, (ii) a homogeneously branched ethylene/alpha-olefin copolymer, (iii) an olefin block copolymer, and (iv) a random polypropylene copolymer. The top skin layer can comprise a single propylene/alpha-olefin copolymer or a blend of two or more propylene/alpha-olefin copolymers. Likewise, each of the (i) a styrenic block copolymer, (ii) a homogeneously branched ethylene/alpha-olefin copolymer, (iii) an olefin block copolymer, and (iv) a random polypropylene copolymer can be present neat or as a blend of two or more copolymers. The top skin layer can also comprise one or more optional additives such as processing aids, extenders, blocking agents, pigments and/or dyes, antioxidants, UV-stabilizers or absorbers, flame retardants, fillers (such as talc, calcium carbonate), and the like.

The top skin layer typically comprises at least 10, more typically at least 20 and even more typically at least 30, weight percent (wt%) propylene/alpha-olefin copolymer. The maximum amount of propylene/alpha-olefin copolymer in the top coating layer typically does not exceed 90, more typically does not exceed 80 and even more typically does not exceed 70, wt%.

The total amount of (i) styrenic block copolymer, (ii) homogeneously branched, linear ethylene/alpha-olefin copolymer, (iii) olefin block copolymer, and (iv) random polypropylene copolymer in the top skin layer typically is at least 10, more typically at least 20 and even more typically at least 30, wt%. The maximum total amount of (i) styrenic block copolymer, (ii) homogeneously branched ethylene/alpha-olefin copolymer, (iii) olefin block copolymer, and (iv) random polypropylene copolymer in the top skin layer typically does not exceed 90, more typically does not exceed 80 and even more typically does not exceed 70, wt%.

If present at all, the total amount of optional additives present in the top skin layer typically is greater than zero, more typically at least 1 and even more typically at least 2, parts per hundred resin (phr). If present at all, the total amount of optional additives in the top skin layer typically does not exceed 10, more typically does not exceed 7 and even more typically does not exceed 5, phr.

If present at all, the total amount of optional fillers present in the top skin layer typically is greater than zero, more typically at least 5 and even more typically at least 10, weight percent (wt%). If present at all, the total amount of optional additives in the top skin layer typically does not exceed 60, more typically does not exceed 40 and even more typically does not exceed 20, wt%.

The top skin layer is typically prepared by blending or compounding the individual components with one another in any conventional mixing apparatus, e.g., Banbury kneader or any suitable extruder, under conditions and for a time that produces an at least substantially homogeneous mixture, and then calendering the mixture using conventional equipment and conditions to form a sheet. The sheet is then heat laminated to the middle foam layer using conventional laminating equipment and conditions.

### Foam Layer

The foam or middle foam layer (layer 12 in Figures 1B-1D) also comprises a propylene/alpha-olefin copolymer, preferably a propylene/ethylene copolymer, and at least one of (i) a styrenic block copolymer, (ii) a homogeneously branched ethylene/alpha-olefin copolymer, (iii) an olefin block copolymer, and (iv) a random polypropylene copolymer. In certain embodiments the middle foam layer comprises a propylene/alpha-olefin copolymer and at least two, three or all four of components (i)-(iv). The middle foam layer can comprise a single propylene/alpha-olefin copolymer or a blend of two or more propylene/alpha-olefin copolymers. Likewise, each of the (i) a styrenic block copolymer, (ii) a homogeneously branched ethylene/alpha-olefin copolymer, (iii) an olefin block copolymer, and (iv) a random polypropylene copolymer can be present neat or as a blend of two or more copolymers. The middle foam layer will also comprise the gas from the decomposed blowing agent and any unreacted, residual blowing agent. The middle foam layer can also comprise one or more optional additives such as processing aids, extenders, blocking agents, pigments and/or dyes, antioxidants, UV-stabilizers and/or absorbers, flame retardants, fillers (such as talc, calcium carbonate), and the like.

The middle foam layer typically comprises at least 30, more typically at least 40 and even more typically at least 50, weight percent (wt%) propylene/alpha-olefin copolymer. The maximum amount of propylene/alpha-olefin copolymer in the middle foam layer typically does not exceed 90, more typically does not exceed 80 and even more typically does not exceed 70, wt%. The middle foam layer can be compositionally the same as the top skin layer save for the gas and by-products attributable to the foaming process.

The total amount of (i) styrenic block copolymer, (ii) homogeneously branched, linear ethylene/alpha-olefin copolymer, (iii) olefin block copolymer, and (iv) random polypropylene copolymer in the middle foam layer typically is at least 10, more typically at least 20 and even more typically at least 30, wt%. The maximum total amount of (i) styrenic block copolymer, (ii) homogeneously branched ethylene/alpha-olefin copolymer, (iii) olefin block copolymer, and (iv) random polypropylene copolymer in the middle foam layer typically does not exceed 70, more typically does not exceed 60 and even more typically does not exceed 50, wt%.

Generally, the blowing agent is incorporated into the resin composition which is to be foamed in amounts ranging from 0.1 to 30, preferably 1 to 20 and more preferably 2 to 10, phr. The blowing agent typically is incorporated into the melt stream under a pressure which is sufficient to inhibit its activation, that is, to inhibit foaming of the melt stream during the incorporation of the blowing agent and subsequent processing of the composition until the stream is ready to be foamed.

If present at all, the total amount of optional additives present in the foam layer typically is greater than zero, more typically at least 1 and even more typically at least 2, phr. If present at all, the total amount of optional additives in the foam layer typically does not exceed 10, more typically does not exceed 7 and even more typically does not exceed 5, phr.

If present at all, the total amount of optional filler present in the foam layer typically is greater than zero, more typically at least 5 and even more typically at least 10, weight percent (wt%). If present at all, the total amount of optional fillers in the foam layer typically does not exceed 60, more typically does not exceed 40 and even more typically does not exceed 20, wt%.

The foam layer is typically prepared by blending or compounding the individual components with one another in any conventional mixing apparatus, e.g., Banbury kneader or any suitable extruder, under conditions and for a time that produces an at least substantially homogeneous mixture, calendering the mixture using conventional equipment and conditions to form a sheet, and then heat laminating the sheet to the top coating and/or bottom fabric layers using conventional lamination equipment and conditions. The foam layer is typically not subjected to foaming conditions until after it is laminated to at least one of the top coating and bottom fabric layers, preferably not until it is laminated to both layers (if a three- or more layer structure). The foaming conditions are such that very fine and regular cells are formed throughout the layer. Typical foaming conditions include an oven temperature of 220°C or more and an oven residence time of 100-120 seconds. The foam efficiency [i.e., the ratio of expanded volume to original (non-expanded) volume] is based on the thickness ratio, and it is typically 50 to 350, more typically 150 to 250. The sheets typically exhibit a tensile strength of 5-90 kilograms of force per square centimeter (kgf/cm2), an elongation of 100-1000%, and tear strength of 5-50 kgf/cm.

### Bottom Fabric Layer

The bottom fabric layer comprises a flexible, polymeric material which can be woven, nonwoven, knitted, plained, spunbond, etc., and it can comprise natural and/or synthetic fiber. In one embodiment, the fabric layer is a nonwoven, polymeric, spunbond material of a weight of 100-500, more typically of 150-400 and even more typically of 200-350, grams per square meter (g/m²). Fabrics that can be used in the practice of this invention include, but are not limited to, cotton, silk and various synthetics based on polyolefins (e.g., polyethylene, polypropylene, etc.), nylon, polyester, polyurethane (e.g., a spandex material), and the like. In one embodiment, the preferred fabric is prepared from polyester, polyethylene or polypropylene. The fabric can be subjected to a pre-lamination treatment, e.g., corona surface treatment, impregnation, etc., or not, and the foam or top skin layer is ultimately heat laminated to it.

### Propylene-alpha-Olefin Copolymer

The base polymer of the top skin and middle foam layers is a propylene/alpha-olefin copolymer, which is characterized as having substantially isotactic propylene sequences. "Substantially isotactic propylene sequences" means that the sequences have an isotactic triad (mm) measured by ¹³C NMR of greater than 0.85; in the alternative, greater than 0.90; in another alternative, greater than 0.92; and in another alternative, greater than 0.93. Isotactic triads are well-known in the art and are described in, for example, USP 5,504,172 and International Publication No. WO 00/01745, which refer to the isotactic sequence in terms of a triad unit in the copolymer molecular chain determined by ¹³C NMR spectra.

The propylene/alpha-olefin copolymer may have a melt flow rate (MFR) in the range of from 0.1 to 25 g/10 minutes, measured in accordance with ASTM D-1238 (at 230°C /2.16 Kg). All individual values and subranges from 0.1 to 25 g/10 minutes are included and disclosed by this range; for example, the MFR can be from a lower limit of 0.1 g/10 minutes, 0.2 g/10 minutes, or 0.5 g/10 minutes to an upper limit of 25 g/10 minutes, 15 g/10 minutes, 10 g/10 minutes, 8 g/10 minutes, or 5 g/10 minutes. For example, the propylene/alpha-olefin copolymer may have a MFR in the range of 0.1 to 10 g/10 minutes; or the propylene/alpha-olefin copolymer may have a MFR in the range of 0.2 to 10 g/10 minutes.

The propylene/alpha-olefin copolymer comprises units derived from propylene and one or more alpha-olefin comonomers. Exemplary comonomers utilized to manufacture the propylene/alpha-olefin copolymer are C₂ and C₄ to C₁₀ alpha-olefins; for example, C₂, C₄, C₆ and C₈ alpha-olefins. The propylene/alpha-olefin copolymer comprises from 1 to 30 wt% of one or more units derived from one or more alpha-olefin comonomers.

The propylene/alpha-olefin copolymer has a molecular weight distribution (MWD), defined as weight average molecular weight divided by number average molecular weight (M_{w}/Mₙ) of 3.5 or less; or 3.0 or less; or from 1.8 to 3.0.

Such propylene/alpha-olefin copolymers are further described in the USP 6,960,635 and 6,525,157. Such propylene/alpha-olefin copolymers are commercially available from The Dow Chemical Company, under the trade name VERSIFY, or from ExxonMobil Chemical Company, under the trade name VISTAMAXX.

### Styrenic Block Copolymer

Examples of styrenic block copolymers suitable for the invention are described in EP 0 712 892 B1, WO 2004/041538 A1, USP 6,582,829B1, US2004/0087235 A1, US2004/0122408 A1, US2004/0122409A1, and USP 4,789,699, 5,093,422 and 5,332,613.

In general, hydrogenated styrenic block copolymers suitable for the invention have at least two mono-alkenyl arene blocks, preferably two polystyrene blocks, separated by a block of saturated conjugated diene comprising less than 20% residual ethylenic unsaturation, preferably a saturated polybutadiene block. The preferred styrenic block copolymers have a linear structure although in some embodiments, branched or radial polymers or functionalized block copolymers make useful compounds (amine-functionalized styrenic block copolymers are generally disfavored in the manufacture of the artificial leather of this invention).

Typically, polystyrene-saturated polybutadiene-polystyrene and polystyrene-saturated polyisoprene-polystyrene block copolymers comprise polystyrene end-blocks having a number average molecular weight from 5,000 to 35,000 and saturated polybutadiene or saturated polyisoprene mid-blocks having a number average molecular weight from 20,000 to 170,000. The saturated polybutadiene blocks preferably have from 35-55% 1,2-configuration and the saturated polyisoprene blocks preferably have greater than 85% 1,4-configuration.

The total number average molecular weight of the styrenic block copolymer is preferably from 30,000 to 250,000 if the copolymer has a linear structure. Such block copolymers typically have an average polystyrene content from 10% by weight to 65%, more typically from 10% by weight to 40% by weight.

SEBS (S is styrene, E is ethylene and B is butylene) and SEPS (P is propylene) block copolymers useful in certain embodiments of the present invention are available from Kraton Polymers, Asahi Kasei and Kuraray America.

### Homogeneously Branched Ethylenelalpha-Olefin Copolymer

The homogeneously branched ethylene/alpha-olefin copolymers useful in the practice of this invention are made with a single-site catalyst such as a metallocene catalyst or constrained geometry catalyst, and typically have a melting point of less than 105, preferably less than 90, more preferably less than 85, even more preferably less than 80 and still more preferably less than 75, C. The melting point is measured by differential scanning calorimetry (DSC) as described, for example, in USP 5,783,638. Such ethylene/α-olefin copolymers with a low melting point often exhibit desirable flexibility and thermoplastic properties useful in the fabrication of the artificial leather of this invention.

The α-olefin is preferably a C₃₋₂₀ linear, branched or cyclic α-olefin. Examples of C₃₋₂₀ α-olefins include propene, 1-butene, 4-methyl-1-pentene, 1-hexene, 1-octene, 1-decene, 1-dodecene, 1-tetradecene, 1-hexadecene, and 1-octadecene. The α-olefins can also contain a cyclic structure such as cyclohexane or cyclopentane, resulting in an α-olefin such as 3-cyclohexyl-1-propene (allyl cyclohexane) and vinyl cyclohexane. Although not α-olefins in the classical sense of the term, for purposes of this invention certain cyclic olefins, such as norbornene and related olefins, are α-olefins and can be used in place of some or all of the α-olefins described above. Similarly, styrene and its related olefins (for example, α-methylstyrene, etc.) are α-olefins for purposes of this invention. Illustrative homogeneously branched ethylene/alpha-olefin copolymers include ethylene/propylene, ethylene/butene, ethylene/1-hexene, ethylene/1-octene, ethylene/styrene, and the like. Illustrative terpolymers include ethylene/propylene/1-octene, ethylene/propylene/butene, ethyleneibutene/1-octene, and ethylene/butene/styrene. The copolymers can be random or blocky.

More specific examples of homogeneously branched ethylene/alpha-olefin interpolymers useful in this invention include homogeneously branched, linear ethylene/α-olefin copolymers (e.g. TAFMER® by Mitsui Petrochemicals Company Limited and EXACT® by Exxon Chemical Company), and the homogeneously branched, substantially linear ethylene/α-olefin polymers (e.g., AFFINITY® and ENGAGE® polyethylene available from The Dow Chemical Company). The substantially linear ethylene copolymers are especially preferred, and are more fully described in USP 5,272,236, 5,278,272 and 5,986,028. Blends of any of these interpolymers can also be used in the practice of this invention.

### Olefin Block Copolymer

The olefin block copolymers that can be used in the practice of this invention are multi-block or segmented copolymers. These are polymers comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In certain embodiments, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of polydispersity index (PDI or M_{w}/Mₙ), block length distribution, and/or block number distribution due to the unique process making of the copolymers. More specifically, when produced in a continuous process, embodiments of the polymers may possess a PDI ranging from about 1.7 to about 8; from about 1.7 to about 3.5 in other embodiments; from about 1.7 to about 2.5 in other embodiments; and from about 1.8 to about 2.5 or from about 1.8 to about 2.1 in yet other embodiments. When produced in a batch or semi-batch process, embodiments of the polymers may possess a PDI ranging from about 1.0 to about 2.9; from about 1.3 to about 2.5 in other embodiments; from about 1.4 to about 2.0 in other embodiments; and from about 1.4 to about 1.8 in yet other embodiments.

Ethylene/α-olefin multi-block interpolymers comprise ethylene and one or more co-polymerizable α-olefin comonomers in polymerized form, characterized by multiple (i.e., two or more) blocks or segments of two or more polymerized monomer units differing in chemical or physical properties (block interpolymer), preferably a multi-block interpolymer. In some embodiments, the multi-block interpolymer may be represented by the following formula:

(AB)ₙ

where n is at least 1, preferably an integer greater than 1, such as 2, 3, 4, 5, 10, 15, 20, 30, 40, 50, 60, 70, 80, 90, 100, or higher; "A" represents a hard block or segment; and "B" represents a soft block or segment. Preferably, A's and B's are linked in a linear fashion, not in a branched or a star fashion. "Hard" segments refer to blocks of polymerized units in which ethylene is present in an amount greater than 95 weight percent in some embodiments, and in other embodiments greater than 98 weight percent. In other words, the comonomer content in the hard segments is less than 5 weight percent in some embodiments, and in other embodiments, less than 2 weight percent of the total weight of the hard segments. In some embodiments, the hard segments comprise all or substantially all ethylene. "Soft" segments, on the other hand, refer to blocks of polymerized units in which the comonomer content is greater than 5 weight percent of the total weight of the soft segments in some embodiments, greater than 8 weight percent, greater than 10 weight percent, or greater than 15 weight percent in various other embodiments. In some embodiments, the comonomer content in the soft segments may be greater than 20 weight percent, greater than 25 eight percent, greater than 30 weight percent, greater than 35 weight percent, greater than 40 weight percent, greater than 45 weight percent, greater than 50 weight percent, or greater than 60 weight percent in various other embodiments.

### Random Polypropylene Copolymer

The random propylene polymers typically comprise 90 or more mole percent units derived from propylene. The remainder of the units in the propylene copolymer is derived from units of at least one α-olefin.

The α-olefin component of the propylene copolymer is preferably ethylene (considered an α-olefin for purposes of this invention) or a C₄₋₂₀ linear, branched or cyclic α-olefin. Examples of C₄₋₂₀ α-olefins include 1-butene, 4-methyl-1-pentene, 1-hexene, 1-octene, 1-decene, 1-dodecene, 1-tetradecene, 1-hexadecene, and 1-octadecene. The α-olefins also can contain a cyclic structure such as cyclohexane or cyclopentane, resulting in an α-olefin such as 3-cyclohexyl-1-propene (allyl cyclohexane) and vinyl cyclohexane. Although not α-olefins in the classical sense of the term, for purposes of this invention certain cyclic olefins, such as norbornene and related olefins, particularly 5-ethylidene-2-norbornene, are α-olefins and can be used in place of some or all of the α-olefins described above. Similarly, styrene and its related olefins (for example, α-methylstyrene, etc.) are α-olefins for purposes of this invention. Illustrative random propylene copolymers include but are not limited to propylene/ethylene, propylene/1-butene, propylene/1-hexene, propylene/1-octene, and the like. Illustrative terpolymers include ethylene/propylene/1-octene, ethylene/propylene/1-butene, and ethylene/propylene/diene monomer (EPDM).

In one embodiment the random polypropylene copolymer is an ethylene-grafted copolymer produced by the use of a Ziegler-Natta catalyst, and it has a MFR from 1g/10min to 50g/10min at 2.16 kg/230°C. In one embodiment, the random polypropylene has an MFR of 12g/10 min at 2.16 kg/230°C. In one embodiment, the random polypropylene has an MFR of 18g/10 min at 2.16 kg/230°C.

In one embodiment the random polypropylene copolymer has a melting temperature (Tm) as determined by differential scanning calorimetry (DSC) that is greater than the Tm of propylene/alpha-olefin copolymer. One acceptable DSC procedure for determining the melting temperature of the random polypropylene copolymer and propylene/alpha-olefin copolymer is that described in USP 7,199,203.

### Blowing Agent

Most any of the known blowing agents (also known as foaming or expansion agents) can be employed, including gaseous materials, volatile liquids and chemical agents which decompose into a gas and other byproducts. Representative blowing agents include, without limitation, nitrogen, carbon dioxide, air, methyl chloride, ethyl chloride, pentane, isopentane, perfluoromethane, chlorotrifluoromethane, dichlorodifluoromethane, trichlorofluoromethane, perfluoroethane, 1-chloro-1, 1-difluoroethane, chloropentafluoroethane, dichlorotetrafluoroethane, trichlorotrifluoroethane, perfluoropropane, chloroheptafluoropropane, dichlorohexafluoropropane, perfluorobutane, chlorononafluorobutane, perfluorocyclobutane, azodicarbonamide (ADCA), azodiisobutyronitrile, benzenesulfonhydrazide, 4,4-oxybenzene sulfonyl-semicarbazide, p-toluene sulfonyl semicarbazide, barium azodicarboxylate, N,N'dimethyl-N,N'-dinitrosoterephthalamide, and trihydrazino triazine. Currently, ADCA is a preferred blowing agent.

### Additives

The top skin and middle foam layers may contain additives including but not limited to antioxidants, curing agents, cross linking co-agents, boosters and retardants, processing aids, ultraviolet absorbers or stabilizers, antistatic agents, nucleating agents, slip agents, plasticizers, lubricants, viscosity control agents, tackifiers, anti-blocking agents, surfactants, extender oils, acid scavengers, and metal deactivators. Additives can be used in amounts ranging from 0.01 wt% or less to 10 wt% or more based on the weight of the composition.

### Fillers

Examples of fillers include but are not limited to clays, precipitated silica and silicates, fumed silica, calcium carbonate, ground minerals, carbon blacks with arithmetic mean particle sizes larger than 10 nanometers, and the various known flame retardants, particularly halogen-free flame retardants. Fillers can be used in amounts ranging from greater than zero to 50 wt% or more based on the weight of the layer or total composition.

### Calendering Process

The present invention can be manufactured using the same conventional calendaring and lamination processes used for PVC-based leathers, and this is an advantage in terms of facility investment. Propylene-ethylene based resins can easily be used in this process because their stickiness against the roll surface is little as compared to other ethylene/propylene-based copolymers. Inherently, the glass transition temperature of propylene-ethylene copolymer is relatively higher than that of ethylene alpha-olefin copolymer which has high elastic modulus and stickiness. Moreover, its melt tension lends itself well to lamination, embossing, and take-off.

One of the important factors in the calendering process is to optimize the roll-banking condition, a condition well known to those skilled in the art. This is indicative of good melt-mixing of the resins. Usually high melt-tension requires a high molecular weight resin, but high molecular weight resins are not easily melted in roll mixing. For good banking conditions, a balance is needed between the melt-tension and melt-fusion.

The three-layer products comprise a backing fabric, a polyolefin-based foamed layer, and a polyolefin-based top-layer, the latter optionally coated with a primer and the primer with a top coating. The top skin layer and middle foam layer are made by a calendaring process, and then laminated to one another and the bottom fabric layer in any convenient order. Foaming is typically conducted after lamination in an oven typically maintained at 220°C or higher for 100-140 seconds. The optional primer and PU top coating layers are then applied to the top skin layer of the laminated, three-layer structure.

### SPECIFIC EMBODIMENTS

### Formulations and Properties of the Top Skin and Middle Foam Layers

The polymers used in these examples include VERSIFY™, a propylene-ethylene copolymer; ENGAGE^{™}, an ethylene/alpha-olefin copolymer; and INFUSE™, an olefin block copolymer, , all available from The Dow Chemical Company; and YUPLENE® R370Y, a random polypropylene copolymer available from SK Corporation. The rubbers include KRATON™ MD6945, a hydrogenated, linear triblock based on styrene and ethylene/butylene (SEBS) available from Kraton Polymers; TUFTEC H1051 rubber and S.O.E.^{™} SS9000 rubber, both SEBS rubbers and available from Asahi Kasei; and SEPTON^{™} 8004 (an SEBS rubber), SEPTON^{™} 2005 (an hydrogenated styrene/ethylene/propylene/styrene block copolymer), and HYBAR^{™} 5127 (a styrene block copolymer), all available from Kuraray America. VERSIFY™ propylene-ethylene copolymer (PER) provides easy processing in calendering and extrusion operations and gives heat-sealable films and sheets with combinations of good haptics, softness, and flexibility without plasticizers, and compatibility in blends for compounding, calendering, and sheet extrusion. Table 1 further describes the polymers and rubbers used in the examples.

The styrenic block copolymers have a compatibility with polyolefin-based elastomers and provide an improved foaming capability and wetability to the solvent-borne CPP primer and PU top coating. The blowing agent is azodicarbonamide (ADCA) which is used as a foaming agent for producing such foamed plastics as PVC, EVA, PP, PE, PS etc., imitation leather and plastic products with high demands and dense, homogeneous apertures. This product is a strong organic foaming agent of the heat decomposition type, e.g., it decomposes at temperatures in excess of 120°C. The blowing accelerators include three different types of metal-based fatty acids such as zinc stearate, barium stearate, and calcium stearate.

The polymer blending ratio is based on the banking condition and stickiness as well as mechanical properties of final sheet products. The styrenic block copolymer (SBC) is applied to obtain the desired foam cell regularity and density which in turn determines the flexibility and properties of foam layer. The foam efficiency of propylene-ethylene copolymer is better without SBC than with it at commercial line conditions. However, the SBC is important to the adhesion strength between the top skin layer and the primer and PU top-coating. The random polypropylene provides heat resistance, toughness and light stability to the top-layer.

Table 2 reports a first series of formulations used to produce foamed and top layers. The units are in parts per hundred (pph). Table 3 reports the processing conditions and observations for the Table 1 formulations. Tables 4 and 5 report a second series of formulations and observations on this second series of formulations, and Tables 6 and 7 report a third series of formulations and observations on this third series of formulations.

Tables 2 and 3 report the data on an incumbent, i.e., a conventional artificial leather with a flexible PVC top layer, and artificial leathers within the scope of the invention. PVC, the most popular conventional material for the synthetic and artificial leather market, requires the use of a plasticizer which improves the mobility of molecular chains. The products of this invention, however, do not require the use of plasticizer and not only exhibit a flexibility competitive with PVC, but also provides better mechanical properties, better thermal stability on processing, and better economic advantage due to its lower density.

Among the four types of foamed layer examples, FOAM-1 and FOAM-2 afforded better softness and hand feel in terms of foam efficiency, while FOAM-3 and FOAM-4 examples afforded better heat resistance and adequate flexibility in terms of the Vicat softening temperature. In the comparison of top layers, the examples including TOP-2 afforded better mechanical properties and better thermal stability than the incumbent (PVC) top layer. The examples of FOAM-1 and FOAM-2 show the effect of SEBS versus VERSIFY^{™} propylene-ethylene copolymer in terms of foaming efficiency (little difference), while FOAM-2 using VERSIFY^{™} propylene-ethylene copolymer shows better mechanical properties (tensile strength and elongation). The examples of FOAM-3 and FOAM-4 describe the effect of RCP on thermal stability and other mechanical properties. The examples of FOAM-1 and FOAM-2 are more suitable for soft applications such as fashion bags, shoes or garments, regardless of the use of SEBS or VERSIFY^{™} propylene-ethylene copolymer, while the examples of FOAM-3 and FOAM-4 are more suitable for industrial applications such as roofing membrane, tarpaulin or furnishing which need high heat resistance.

Bally flexibility test of Nike #11 (ASTM D6182) determines the durability of coatings applied to synthetic leather, leather and fabrics (PU Coated Materials) by repeatedly flexing the specimen. Cracking of the coating can lead to loss of adhesion, poor cosmetics or a performance failure in the field. All samples reported in Table 3 demonstrated a Bally Flexibility at 25°C of over 100,000 cycles.

Table 6 reports comparative light discoloration, crocking and adhesion data for a series of artificial leather samples. Light discoloration is measured with Nike #G37 (AATCC 16, ASTM G23/G153) standard, which is the test method to determine if white or colored samples of a material will yellow or fade after exposing the sample to ultraviolet radiation using a QUV accelerated weathering tester. This test covers all textiles, synthetic leathers, leathers, threads, laces, webbing/gore tapes, painted components (decorative ink printing or sublimation printing), transparent, clear and translucent rubber, and foams (excluding EVA, Phylon, rubber), and plastics (excluding counters). Crocking is measured based on AATCC-8 (ASTM D5053), which is the standard test method for colorfastness of crocking of leather. This test method covers the determination of the degree of color that may be transferred from leather to other surfaces by rubbing under wet (damp) or dry conditions, or both. Adhesion strength (bond or ply strength) has been measured with NIKE #G44 standard, which determines the bond strength between a coated surface and backing layer for all type materials that are laminated (both wet and dry PU Film Coated process). This includes all synthetic leathers and sanded or buffed PU coating on split leathers.

The artificial leather is composed of three layers including a top skin layer, a middle foam layer, and a bottom, backing fabric layer. The backing fabric is a base substrate to maintain the shape and the mechanical properties of the artificial leather, and easily affects on the haptics (hand feel) of the leather. As such, the selection of the backing cloth is also important to obtain suitable leather characteristics in terms of mechanical properties and haptics. In these examples the backing cloth is a high weight spunbond (310g/m², thickness 1.2mm, width 58 in.) fabric.

The adhesion strength and Bally flexibility are mainly used for shoe manufacturing, and are excluded for other leather applications such as garments, bags, furnishing, tarpaulin and so on. There are five different types of leather systems based on the materials used for the top or foam layers. The systems that include SEBS show enough properties to be acceptable for shoe manufacturing in terms of adhesion strength and Bally flexibility. Most of the properties except adhesion strength and Bally flex are satisfactory as compared to the incumbent specification, and all systems are applicable for other leather applications (except shoe). The calendering and lamination with finishing processes, like priming and PU top coating are suitable for commercial applications.

Based on Nike #44 standard measurement, the adhesion strength between the coated surface (PU top coating on top layer) and backing layer (down-rubber sole of shoe) is required by a minimum of 2.5kgf/cm after 24hrs. Table 7 describes the performance of various top layer formulations for the adhesion strength. The top layers are treated with solvent-borne chlorinated polypropylene (CPP) primer and PU top-coating before the adhesion strength test is conducted. Songstab SZ-210 is a zinc stearate activator available from Songwon Chemical. AC1000 is an azodicarbonamide blowing agent available from Kumyang Chemical.

Adhesion strength between the top skin layer and the PU top coating layer improves with the use of a primer. The styrenic triblock or diblock copolymers, which have a good compatibility with polypropylene, act as an effective bridge between propylene-ethylene copolymer and the PU coating. Considering the polarity of the primer, which is CPP, the styrenic triblock or diblock copolymers impart polarity to non-polar polyolefin material like a propylene-ethylene copolymer, and increase the adhesion strength between primer and top layer. Accordingly, the addition of SEBS-1, which has good compatibility with PP and polarity, showed acceptable adhesion strength between top layer and PU top coating in combination with a primer.

The foam ratio is based on the flexibility and softness of the foamed layer, as well as the mechanical properties, which target tear strength of 15 kgf/cm² and a heat resistance up to 130°C. Experimentally, a foaming ratio of 50-350%, preferably 200-250%, is found to be the most suitable for artificial leather. If the foam efficiency is above 250%, most of foam-cells coalesce and the foam is likely to collapse. Since the blowing agent is already mixed with other resins during calendering, pre-foaming is to be avoided during the calendering process. By waiting until the foaming stage, the foam layer is made with good cell regularity and cell structure which ultimately affect the flexibility and haptics of the artificial leather. The roll banking condition is the same as manufacturing the top-layer under the same calendering temperature conditions. Because the foam layer gives the leather light weight in addition to flexibility, propylene-ethylene copolymer resins, which have a lower density than that of PVC or PU or SBC, are a better choice.

The VERSIFY™ 2000 series demonstrated a take-up performance in calendering that was comparable to PVC and TPU which are incumbent materials for synthetic leather manufacture.

Among the formulations using the blends of OBC or POE with PER-4, D3 and D6 have better calendering performance than others, but for the foam efficiency, D6 shows the best balance of foam efficiency with mechanical properties. The calendering performance is based on the banking condition and the efficiency of take-up, and determined by the MFR of 2 to 4g/10min at 230°C, and the density of 0.86 to 0.88 g/cm³.

The foaming of sheet layers is conducted at 220°C for 100-120 seconds in an oven after calendering, and the prevention of premature foaming is important to accomplish fine and regular cell-density. The concentration of AC1000, which is ADCA, used for leather sheet foaming, is controlled to improve the foam efficiency. When the running temperature of calendering is in the range of 150 to 160°C, the most suitable concentration of blowing agent is about 4 pph. With PER-4 a concentration above 6 pph of blowing agent can cause premature foaming notwithstanding that other performance factors, such as take-up in calendering, is accomplished well.

The addition of fillers to foaming sheet compounding is known to prevent the propagation of foaming inside the molecular chains, and so fillers are not usually recommended for use in foaming. However, fillers can be used to improve the mechanical properties of the foamed sheet.

**TABLE 1**

| POLYMERS USED IN THE EXAMPLES | | | | |
|---|---|---|---|---|
| **Product** | **Designation** | **MFR or MI ⁽¹⁾ (gm/10 min.)** | **Density (g/cm³)** | **Comonomer** |
| VERSIFY 2000 | PER-1 | MFR = 2 | 0.888 | ethylene |
| VERSIFY 2200 | PER-2 | MFR = 2 | 0.876 | ethylene |
| VERSIFY 2300 | PER-3 | MFR = 2 | 0.866 | ethylene |
| VERSIFY 2400 | PER-4 | MFR = 2 | 0.8585 | ethylene |
| VERSIFY 3401 | PER-5 | MFR = 8 | 0.863 | ethylene |
| | | | | |
| ENGAGE 6386 | POE-1 | MI < 0.5 | 0.875 | butene |
| ENGAGE 7086 | POE-2 | MI < 0.5 | 0.901 | butene |
| ENGAGE 7380 | POE-3 | MI < 0.5 | 0.870 | butene |
| | | | | |
| OBC D9000 | OBC-1 | MI = 0.5 | 0.877 | octene |
| OBC D9007 | OBC-2 | MI = 0.5 | 0.866 | octene |
| OBC D9100 | OBC-3 | MI = 1.0 | 0.877 | octene |
| OBC D9107 | OBC-4 | MI = 1.0 | 0.866 | octene |
| OBC D9500 | OBC-5 | MI = 5.0 | 0.877 | octene |
| OBC D9530 | OBC-6 | MI = 5.0 | 0.887 | octene |
| | | | | |
| YUPLENE R370Y | RCP | MFR = 18 | n/a | n/a |
| | | | | |

| | | | | **Styrene ⁽²⁾ (wt %)** |
|---|---|---|---|---|
| KRATON MD6945 | SEBS-1 | MFR = 2.5 - 5.5 | -- | 11 - 14 |
| TUFTEC H1051 | SEBS-2 | MFR = 0.8 | 0.93 ⁽⁴⁾ | 42 |
| SEPTON 8004 | SEBS-3 | MFR = 0.1 | 0.908 ⁽⁴⁾ | 29 |
| SEPTON 2005 | SEPS-1 | SV ⁽³⁾ = 40 | 0.888 ⁽⁴⁾ | 20 |
| S.O.E. SS9000 | HSBR | MFR = 2.6 | 0.99 ⁽⁴⁾ | -- |
| HYBAR 5127 | SIIS | MI = 5 | 0.94 ⁽⁴⁾ | 20 |

| | | | | |
|---|---|---|---|---|
| *(1) Melt Flow Rate (MFR* @ *230°C, 2.16 kg); Melt Index (MI* @ *190°C, 2.16 kg)* *(2) Styrene (wt* %) *measured before hydrogenation; Method BAM 919* *(3) Solution viscosity, Toluene solution* @ *30°C, 5 wt %: Mpa*sec* *(4) ISO 1183* | | | | |

**TABLE 2**

| FIRST SERIES OF TOP AND FOAM LAYER FORMULATIONS | | | | | | |
|---|---|---|---|---|---|---|
| (Resin units are in wt%, all other are pph) | | | | | | |
| **Ingredient** | **FOAMED Layer** | | | | **TOP Layer** | |
| | **FOAM-1** | **FOAM-2** | **FOAM-3** | **FOAM-4** | **TOP-1** | **TOP-2** |
| PER-3 | - | 40 | - | 35 | - | 60 |
| PER-4 | 40 | 30 | 45 | 50 | 50 | - |
| PER-5 | 40 | 30 | - | - | - | - |
| SEBS-1 | 20 | - | 40 | - | 30 | - |
| RCP | - | - | 15 | 15 | 20 | 20 |
| POE-3 | - | - | - | - | - | 20 |
| Zinc-Stearate | 0.4 | 0.4 | 0.4 | 0.4 | 0.5 | 0.5 |
| Barium Stearate | 0.6 | 0.6 | 0.6 | 0.6 | - | - |
| Blowing agent | 4 | 4 | 4 | 4 | - | - |
| Paraffin Oil | 5 | 5 | 5 | 5 | 2 | 2 |
| CaCO₃ | 5 | 5 | 5 | 5 | 5 | 5 |
| IRGANOX 1010 | 0.2 | 0.2 | 0.2 | 0.2 | 0.3 | 0.3 |
| Pigment (Ti0₂) | 5 | 5 | 5 | 5 | 5 | 5 |
| TOTAL | 120.2 | 120.2 | 120.2 | 120.2 | 112.8 | 112.8 |

**TABLE 3**

| PROCESSING CONDITIONS AND OBSERVATIONS | | | | | | | | |
|---|---|---|---|---|---|---|---|---|
| ON THE FIRST SERIES OF FORMULATIONS | | | | | | | | |
| **Properties** | **Unit** | **Incumbent (e.g. PVC Top Layer)** | **TOP Layer** | | **FOAMED Layer** | | | |
| | | | **TOP -1** | **TOP -2** | **FOAM -1** | **FOAM -2** | **FOAM -3** | **FOAM -4** |
| Density | g/cm³ | 1.3∼1.8 | 0.885 | 0.879 | | | | |
| Process Temperature | °C | 130∼180 | 160∼ 165 | 160∼ 165 | 150∼16 0 | 150∼16 0 | 150∼16 5 | 150∼16 5 |
| Roll processability Take-up/ Stickiness/Banking | - | Good | Good | Good | Good | Good | Good | Good |
| Premature foaming | - | - | none | none | none | none | none | none |
| MFR (ASTM D1238 at 230°C. 2.16kg) | g/10mi n | - | 2.5 | 2.6 | 2.1 | 2.4 | 2.2 | 2.5 |
| Vicat Softening Temp ASTM D1525 | °C | 80∼100 | 140 | 143 | 100 | 115 | 134 | 138 |
| Foaming Ratio (Thickness Ratio) | % | - | - | - | 230 | 235 | 210 | 210 |
| Tensile Strength ASTM D638 | kgf/cm 2 | 50∼80 | 110 | 134 | 13 | 18 | 26 | 28 |
| Elongation ASTM F638 | % | 50∼150 | 400 | 410 | 336 | 750 | 358 | 621 |
| Tear Strength ASTM D 624 | kgf/cm | 30∼50 | 40 | 46 | 10 | 11 | 16 | 18 |

**TABLE 4**

| SECOND SERIES OF FORMULATIONS I | | | | |
|---|---|---|---|---|
| **Ingredient** | **E1** | **E2** | **E3** | **E4** |
| PER-1 | 30 | | | |
| PER-2 | | 30 | 40 | 50 |
| PER-4 | 40 | 40 | 40 | 30 |
| PER-5 | 30 | 30 | 20 | 20 |
| Songstab SZ-210 | 0.4 | 0.4 | 0.4 | 0.4 |
| AC1000 | 4 | 4 | 4 | 4 |
| | | | | |
| MFR (230C, 2.16kg) | 3.3 | 3.4 | 3.1 | 3.6 |
| Temp (C) | 160 | 160 | 160 | 160 |
| roll bank | OK | OK | OK | OK |
| Premature foaming | None | None | None | None |
| take up | Good | Good | Good | Good |
| | | | | |
| Foaming Ratio (%) (Thickness ratio) | 220 | 250 | 239 | 220 |
| Tensile (kgf/cm²) | 24.4 | 22.5 | 36.1 | 33.5 |
| Elongation (%) | 480 | 636 | 700 | 620 |
| Tear (kgf/cm) | 16.1 | 15.2 | 18.8 | 17.4 |

**TABLE 5**

| | | | | | | |
|---|---|---|---|---|---|---|
| SECOND SERIES OF FORMULATIONS (Cont'd) | | | | | | |

| | | **E5** | **E6** | **E7** | **E8** | **E9** |
|---|---|---|---|---|---|---|
| | PER-2 | 50 | | | 50 | 50 |
| | PBE-4 | | 40 | 40 | | |
| | PER-5 | 20 | 30 | 30 | 20 | 20 |
| | SEBS-2 | 30 | | | | |
| | SEBS-3 | | 30 | | | |
| | SEPS-1 | | | 30 | | |
| | HSBR | | | | 30 | |
| | SIIS | | | | | 30 |
| | Songstab SZ-210 | 0.4 | 0.4 | 0.4 | 0.4 | 0.4 |
| | AC1000 | 4 | 4 | 4 | 4 | 4 |
| | | | | | | |
| | MFR (230C, 2.16kg) | 3.6 | 1.5 | 0.5 | 4.2 | 4 |
| | Temp (C) | 160 | 160 | 160 | 160 | 160 |
| | roll bank | OK | Flow↓ | Flow↓ | OK | OK |
| | Premature foaming | None | None | None | None | None |
| | Take up | Good | Good | Good | Good | Good |
| | | | | | | |
| **Properties** | **Foaming Ratio (%) (Thickness Ratio)** | **Tensile (kgf/cm²)** | | **Elongation (%)** | | **TEAR (kgf/cm)** |
| **E5** | 180 | | 37 | | 760 | 21 |
| **E6** | 200 | | 18 | | 753 | 9.7 |
| **E7** | 160 | | 34 | | 1,116 | 13 |
| **E8** | 175 | | 54 | | 786 | 23 |
| **E9** | 180 | | 38 | | 654 | 23 |

**TABLE 6**

| PHYSICAL PROPERTIES OF PROPYLENE-ETHYLENE COPOLYMER BASED | | | | | | | |
|---|---|---|---|---|---|---|---|
| FOAMED ARTIFICIAL LEATHER | | | | | | | |
| Properties | Unit | PU or PVC based leather: solvent based PU (solvent reduced PU) | VERSIFY/ SEBS (TOP) | VERSIFY/ ENGAGE (TOP) | VERSIFY/ SEBS (TOP) | VERSIFY/ SEBS (TOP) | VERSIFY/ OBC (TOP) |
| | | | VERSIFY/ SEBS (FOAM) | VERSIFY/ VERSIFY (FOAM) | VERSIFY/ SEBS/ PP (FOAM) | VERSIFY/VERSIFY/ PP (FOAM) | VERSIFY/ OBC (FOAM) |
| Tensile Strength ASTM D5035 | Kgf/ 2.54cm | 40(30) | 60∼70 | 60∼70 | 60∼70 | 60∼70 | 60∼70 |
| Elongation ASTM D5035 | % | 70(50) | 80∼150 | 80∼150 | 80∼150 | 80∼150 | 80∼150 |
| Tear Strength ASTM D2262 | Kg/cm | 9.8(8.4 | 20∼30 | 20∼30 | 20∼30 | 20∼30 | 20∼30 |
| Bally Flex Nike # 11 | Cycle @ 25°C | 100,000 | 100,000 | >50,000 | 100,000 | >50,000 | 100,000 |
| Anti-Abrasion ASTM D 3884 | Mg loss | 40-50 | 40∼50 | 40∼50 | 40∼50 | 40∼50 | 40∼50 |
| Adhesion Strength Nike # 44 | Kgf/cm (24 Hours) | >2.5 | 3.0∼3.5 | 0.5 | 3.0∼3.5 | 3.0∼3.5 | 0.5 |
| Light Discoloration Nike #37 | Grey Scale | >4 | >4 | >4 | >4 | >4 | >4 |
| Crocking AATCC-8 | | >4 | >4 | >4 | >4 | >4 | >4 |

**TABLE 7**

| FORMULATIONS BASED ON BLENDS | | | | | | | | |
|---|---|---|---|---|---|---|---|---|
| OF ENGAGE™ INFUSE™ AND VERSIFY™ (THIRD SERIES) | | | | | | | | |
| | **D1** | **D2** | **D3** | **D4** | **D5** | **D6** | **D7** | **D8** |
| **PER-4** | 80 | 80 | 80 | 80 | 80 | 80 | 80 | 80 |
| **OBC-1** | 20 | | | | | | | |
| **OBC-2** | | 20 | | | | | | |
| **OBC-3** | | | 20 | | | | | |
| **OBC-4** | | | | 20 | | | | |
| **OBC-5** | | | | | 20 | | | |
| **OBC-6** | | | | | | 20 | | |
| **POE-1** | | | | | | | 20 | |
| **POE-2** | | | | | | | | 20 |
| **Songstab SZ-210** | 0.5 | 0.5 | 0.5 | 0.5 | 0.5 | 0.5 | 0.5 | 0.5 |
| **AC1000** | 3 | 3 | 3 | 3 | 3 | 3 | 3 | 3 |
| | | | | | | | | |

| | **D1** | **D2** | **D3** | **D4** | **D5** | **D6** | **D7** | **D8** |
|---|---|---|---|---|---|---|---|---|
| Temp (C) | 150 | 150 | 150 | 150 | 150 | 150 | 150 | 150 |
| roll bank | Flow lowering | Flow lowering | Excellent | Excellent | Flow high | Excellent | Flow lowering | Flow lowering |
| Premature foaming | None | None | None | None | None | None | None | None |
| take up | Excellent | Excellent | Excellent | Excellent | Excellent | Excellent | Excellent | Excellent |
| | | | | | | | | |

| **Exam ple** | | **Foam efficiency (%)** | | **Tensile (kgf/cm²)** | | **Elongation (%)** | | **Tongue Tear (kgs/cm)** |
|---|---|---|---|---|---|---|---|---|
| **D1** | | 240 | | 11.3 | | 783 | | 8.3 |
| **D2** | | 218 | | 10.5 | | 700 | | 6.82 |
| **D3** | | 163 | | 251. | | 916 | | 9.4 |
| **D4** | | 178 | | 15.3 | | 766 | | 8.7 |
| **D5** | | 177 | | 15. | | 760 | | 8.4 |
| **D6** | | 220 | | 13.4 | | 750 | | 7.55 |
| **D7** | | 180 | | 15.2 | | 633 | | 8.8 |
| **D8** | | 200 | | 18 | | 833 | | 10.2 |

## Claims

1. A multilayer structure comprising:
A. A top skin layer comprising a propylene/alpha-olefin copolymer and at least one of (i) a styrenic block copolymer, (ii) a homogeneously branched ethylene/alpha-olefin copolymer, (iii) an olefin block copolymer, and (iv) a random polypropylene copolymer;
B. A middle foam layer comprising a propylene/alpha-olefin copolymer and at least one of (i) a styrenic block copolymer, (ii) a homogeneously branched ethylene/alpha-olefin copolymer, (iii) an olefin block copolymer, and (iv) a random polypropylene copolymer; and
C. A bottom fabric layer comprising a nonwoven, polymeric, spunbond material,
wherein a propylene/alpha-olefin copolymer is characterized as having substantially isotactic propylene sequences with an isotactic triad (mm) measured by ¹³C NMR of greater than 0.85 comprising from 1 to 30 wt% of one or more units derived from one or more alpha-olefin comonomers, a homogeneously, branched ethylene/alpha-olefin copolymer has a melting point of less than 105°C as measured by differential scanning calometry (DSC), an olefin block copolymer comprises two or more chemically distinct regions or segments and a random polypropylene copolymer comprises 90 or more mol% units derived from propylene, with the remainder of the units being derived from units of at least one alpha-olefin.

2. The multilayer structure of Claim 1 further comprising a primer layer in contact with the top skin layer, and a top coating layer in contact with the primer layer.

3. The multilayer structure of any of the preceding claims in which styrenic block copolymer comprises at least two mono-alkenyl arene blocks, separated by a block of saturated conjugated diene comprising less than 20% residual ethylenic unsaturation.

4. The multilayer structure of any of the preceding claims in which the homogeneously branched ethylene/alpha-olefin copolymer is made using a single-site catalyst, has a melting point of less than 95 C, and has an alpha-olefin content of at least 15 weight percent based on the weight of the copolymer.

5. The multilayer structure of any of the preceding claims in which the olefin block copolymer is represented by the formula:
(AB)ₙ
in which n is at least 1, A is a hard block and B is a soft block, and A and B are linked in a linear fashion.

6. The multilayer structure of any of the preceding claims in which the fabric of the bottom layer is prepared from at least one of polyester, polyethylene and polypropylene.

7. The multilayer structure of any of the preceding claims in which at least one of the top skin and middle foam layers further comprises at least one of an antioxidant, curing agent, cross linking co-agent, booster and retardant, processing aid, filler, ultraviolet absorber or stabilizer, antistatic agent, nucleating agent, slip agent, plasticizer, lubricant, viscosity control agent, tackifier, anti-blocking agent, surfactant, extender oil, acid scavenger, and metal deactivator.

8. The multilayer structure of any of the preceding claims in which the top skin, middle foam and bottom fabric layers are joined to one another by heat lamination.

## Patentansprüche

1. Eine mehrschichtige Struktur, die Folgendes beinhaltet:
A. eine obere Hautschicht, beinhaltend ein Propylen/alpha-Olefin-Copolymer und mindestens eines von (i) einem Styrolblockcopolymer, (ii) einem homogen verzweigten Ethylen/alpha-Olefin-Copolymer, (iii) einem Olefinblockcopolymer und (iv) einem statistischen Polypropylencopolymer;
B. eine mittlere Schaumstoffschicht, beinhaltend ein Propylen/alpha-Olefin-Copolymer und mindestens eines von (i) einem Styrolblockcopolymer, (ii) einem homogen verzweigten Ethylen/alpha-Olefin-Copolymer, (iii) einem Olefinblockcopolymer und (iv) einem statistischen Polypropylencopolymer; und
C. eine untere Stoffschicht, beinhaltend ein nichtgewebtes, polymeres Spinnvliesmaterial,
wobei ein Propylen/alpha-Olefin-Copolymer **dadurch gekennzeichnet ist, dass** es im Wesentlichen isotaktische Propylensequenzen mit einer isotaktischen Triade (mm), gemessen mittels ¹³C-NMR, von mehr als 0,85 aufweist und zu 1 bis 30 Gew.-% eine oder mehr Einheiten, abgeleitet von einem oder mehr alpha-Olefin-Comonomeren, beinhaltet, wobei ein homogen verzweigtes Ethylen/alpha-Olefin-Copolymer einen Schmelzpunkt von weniger als 105 °C, wie mittels Differential-Scanning-Kalorimetrie (DSC) gemessen, aufweist, ein Olefinblockcopolymer zwei oder mehr chemisch unterschiedliche Bereiche oder Segmente aufweist und ein statistisches Polypropylencopolymer zu 90 oder mehr Mol-% Einheiten, abgeleitet von Propylen, beinhaltet, wobei der Rest der Einheiten von Einheiten von mindestens einem alpha-Olefin abgeleitet ist.

2. Mehrschichtige Struktur gemäß Anspruch 1, die ferner eine Primerschicht in Kontakt mit der oberen Hautschicht und eine obere Beschichtungsschicht in Kontakt mit der Primerschicht beinhaltet.

3. Mehrschichtige Struktur gemäß einem der vorhergehenden Ansprüche, wobei das Styrolblockcopolymer mindestens zwei Monoalkenylarenblöcke aufweist, die durch einen Block von gesättigtem konjugierten Dien getrennt sind, beinhaltend weniger als 20 % restliche ethylenische Ungesättigtheit.

4. Mehrschichtige Struktur gemäß einem der vorhergehenden Ansprüche, wobei das homogen verzweigte Ethylen/alpha-Olefin-Copolymer unter Verwendung eines Single-Site-Katalysators hergestellt ist, einen Schmelzpunkt von weniger als 95 °C aufweist und einen alpha-Olefin-Gehalt von mindestens 15 Gewichtsprozent, bezogen auf das Gewicht des Copolymers, aufweist.

5. Mehrschichtige Struktur gemäß einem der vorhergehenden Ansprüche, wobei das Olefinblockcopolymer durch folgende Formel dargestellt ist:
(AB)ₙ
wobei n mindestens 1 ist, A ein harter Block ist und B ein weicher Block ist und A und B auf eine lineare Art verknüpft sind.

6. Mehrschichtige Struktur gemäß einem der vorhergehenden Ansprüche, wobei der Stoff der unteren Schicht aus mindestens einem von Polyester, Polyethylen und Polypropylen zubereitet ist.

7. Mehrschichtige Struktur gemäß einem der vorhergehenden Ansprüche, wobei mindestens eine von der oberen Hautschicht und der mittleren Schaumstoffschicht ferner mindestens eines von einem Antioxidationsmittel, einem Härtemittel, einem Vernetzungshilfsmittel, Verstärker und Verzögerer, Verarbeitungshilfsstoff, Füllmittel, Ultraviolettabsorptionsmittel oder -stabilisierungsmittel, Antistatikmittel, Nukleierungsmittel, Gleitmittel, Plastifiziermittel, Schmiermittel, Viskositätsregler, Klebrigmacher, Antiblockmittel, Tensid, Streckungsöl, Säurefänger und Metalldesaktivator beinhaltet.

8. Mehrschichtige Struktur gemäß einem der vorhergehenden Ansprüche, wobei die obere Hautschicht, mittlere Schaumstoffschicht und untere Stoffschicht mittels Heißkaschierung miteinander verbunden sind.

## Revendications

1. Une structure multicouche comprenant :
A. une couche de revêtement de dessus comprenant un copolymère de propylène/alpha-oléfine et au moins un élément parmi (i) un copolymère bloc styrénique, (ii) un copolymère d'éthylène/alpha-oléfine ramifié de façon homogène, (iii) un copolymère bloc d'oléfine, et (iv) un copolymère de polypropylène aléatoire ;
B. une couche de mousse de milieu comprenant un copolymère de propylène/alpha-oléfine et au moins un élément parmi (i) un copolymère bloc styrénique, (ii) un copolymère d'éthylène/alpha-oléfine ramifié de façon homogène, (iii) un copolymère bloc d'oléfine, et (iv) un copolymère de polypropylène aléatoire ; et
C. une couche d'étoffe de dessous comprenant un matériau non tissé, polymère, filé-lié,
dans laquelle un copolymère de propylène/alpha-oléfine est caractérisé comme ayant des séquences de propylène substantiellement isotactiques avec une triade isotactique (mm) mesurée par RMN ¹³C supérieure à 0,85 comprenant de 1 à 30 % en poids d'une ou de plusieurs unités dérivées d'un ou de plusieurs comonomères d'alpha-oléfine, un copolymère d'éthylène/alpha-oléfine ramifié de façon homogène a un point de fusion inférieur à 105 °C tel que mesuré par analyse calorimétrique différentielle (DSC), un copolymère bloc d'oléfine comprend deux régions ou segments distincts chimiquement ou plus et un copolymère de polypropylène aléatoire comprend 90 % en moles ou plus d'unités dérivées de propylène, le reste des unités étant dérivé d'unités d'au moins une alpha-oléfine.

2. La structure multicouche de la revendication 1 comprenant en outre une couche d'apprêt en contact avec la couche de revêtement de dessus, et une couche d'enduit de dessus en contact avec la couche d'apprêt.

3. La structure multicouche de n'importe lesquelles des revendications précédentes dans laquelle le copolymère bloc styrénique comprend au moins deux blocs monoalcénylarène, séparés par un bloc de diène conjugué saturé comprenant moins de 20 % d'insaturation éthylénique résiduelle.

4. La structure multicouche de n'importe lesquelles des revendications précédentes dans laquelle le copolymère d'éthylène/alpha-oléfine ramifié de façon homogène est réalisé en utilisant un catalyseur à site unique, a un point de fusion inférieur à 95 °C, et a une teneur en alpha-oléfine d'au moins 15 pour cent en poids rapporté au poids du copolymère.

5. La structure multicouche de n'importe lesquelles des revendications précédentes dans laquelle le copolymère bloc d'oléfine est représenté par la formule :
(AB)ₙ
dans laquelle n est au moins 1, A est un bloc dur et B est un bloc mou, et A et B sont liés d'une manière linéaire.

6. La structure multicouche de n'importe lesquelles des revendications précédentes dans laquelle l'étoffe de la couche de dessous est préparée à partir d'au moins un élément parmi le polyester, le polyéthylène et le polypropylène.

7. La structure multicouche de n'importe lesquelles des revendications précédentes dans laquelle au moins une couche parmi les couches de revêtement de dessus et de mousse de milieu comprend en outre au moins un élément parmi un antioxydant, un agent de durcissement, un coagent, accélérateur et retardateur de réticulation, un auxiliaire de traitement, une charge, un absorbeur ou stabilisant ultraviolet, un agent antistatique, un agent de nucléation, un agent glissant, un plastifiant, un lubrifiant, un agent de contrôle de viscosité, un agent collant, un agent antiadhérent, un agent tensioactif, une huile de dilution, un capteur d'acide, et un désactivateur de métaux.

8. La structure multicouche de n'importe lesquelles des revendications précédentes dans laquelle les couches de revêtement de dessus, de mousse de milieu et d'étoffe de dessous sont jointes les unes aux autres par laminage à chaud.
